# EUROPEAN PATENT APPLICATION

(11) **EP 4 694 403 A1**
(43) Date of publication of application: **11.02.2026**
(21) Application number: 24784210.7
(22) Date of filing: 01.04.2024
(51) Int. Cl.: H04W 56/00

(54) **REQUEST INFORMATION REPORTING METHOD, INFORMATION CONFIGURATION METHOD, AND RELATED DEVICE**

(30) Priority: 07.04.2023 CN 202310373097
(71) Applicant: Vivo Mobile Communication Co., Ltd., Dongguan, Guangdong 523863 (CN)
(72) Inventor: MO, Yitao, Dongguan, Guangdong 523863 (CN); ZHANG, Yanxia, Dongguan, Guangdong 523863 (CN)
(74) Representative: Conti, Marco
(86) International application number: PCT/CN2024/085154
(87) International publication number: WO 2024/208126

(57) **Abstract**

This application discloses a request information reporting method, an information configuration method, and a related device, and belongs to the field of communication. The request information reporting method in embodiments of this application includes: obtaining, by a terminal, configuration information from a network device, where the configuration information includes information of time quality; and sending, by the terminal, time quality request information by using a target uplink message, where the target uplink message includes at least one of messages Msg1, Msg3, MsgA, configured grant CG physical uplink shared channel PUSCH, and service request SR.

## Description

### CROSS-REFERENCE TO RELATED APPLICATIONS

This application claims the priority to Chinese Patent Application No. 202310373097.X filed on April 7, 2023, which is incorporated herein by reference in its entirety.

### TECHNICAL FIELD

This application relates to the field of communication technologies, and specifically, to a request information reporting method, an information configuration method, and a related device.

### BACKGROUND

In a communication process, information of time quality is used for carrying high-precision time synchronization information. Usually, in a network, a primary network element is responsible for sending the information of time quality, and other network elements receive the information of time quality. For example, a network (Network, NW) may send information of time quality to an idle (IDLE)/inactive (INACTIVE) user equipment (User Equipment, UE) by using a system information block (System Information Block, SIB), or send information of time quality to a connected (CONNECTED) UE by using radio resource control (Radio Resource Control, RRC)-dedicated signaling. The information of time quality is used for ensuring that time of a plurality of network element nodes in the network can be aligned with time indicated in the information of time quality.

Due to a limitation of a device cost and a structure, stability of a crystal oscillator frequency of a network element device is usually not ideal. After a period of time, an error between time maintained by the device according to initial received information of time quality and standard time is gradually larger. Consequently, service transmission cannot arrive at specified time, and timed transmission with high precision cannot be implemented. Finally, transmission performance of a delay-sensitive service is degraded.

### SUMMARY

Embodiments of this application provide a request information reporting method, an information configuration method, and a related device, to resolve a problem that transmission performance of a delay-sensitive service is degraded because an error of information of time quality becomes larger.

According to a first aspect, a request information reporting method is provided. The method includes:
obtaining, by a terminal, configuration information from a network device, where the configuration information includes information of time quality; and
sending, by the terminal, time quality request information by using a target uplink message, where
the target uplink message includes at least one of messages Msg1, Msg3, MsgA, configured grant CG physical uplink shared channel PUSCH, and service request SR.

According to a second aspect, an information configuration method is provided. The method includes:
sending, by a network device, configuration information to a terminal, where the configuration information includes first information of time quality;
receiving, by the network device, time quality request information sent by the terminal by using a target uplink message; and
sending, by the network device, second information of time quality to the terminal, where
the target uplink message includes at least one of messages Msg1, Msg3, MsgA, configured grant CG physical uplink shared channel PUSCH, and service request SR.

According to a third aspect, a terminal is provided, including:
a first receiving module, configured to obtain configuration information from a network device, where the configuration information includes information of time quality; and
a first sending module, configured to send time quality request information by using a target uplink message, where
the target uplink message includes at least one of messages Msg1, Msg3, MsgA, configured grant CG physical uplink shared channel PUSCH, and service request SR.

According to a fourth aspect, a network device is provided, including:
a second sending module, configured to send configuration information to a terminal, where the configuration information includes first information of time quality;
a second receiving module, configured to receive time quality request information sent by the terminal by using a target uplink message; and
a third sending module, configured to send second information of time quality to the terminal, where
the target uplink message includes at least one of messages Msg1, Msg3, MsgA, configured grant CG physical uplink shared channel PUSCH, and service request SR.

According to a fifth aspect, a terminal is provided. The terminal includes a processor and a memory. The memory stores a program or instructions runnable on the processor. The program or the instructions, when executed by the processor, implement the steps of the method according to the first aspect.

According to a sixth aspect, a terminal is provided, including a communication interface. The communication interface is configured to obtain configuration information from a network device, where the configuration information includes information of time quality;
and send time quality request information by using a target uplink message, where
the target uplink message includes at least one of messages Msg1, Msg3, MsgA, configured grant CG physical uplink shared channel PUSCH, and service request SR.

According to a seventh aspect, a network side device is provided. The network side device includes a processor and a memory. The memory stores a program or instructions runnable on the processor, and the program or the instructions, when executed by the processor, implement the steps of the method according to the second aspect.

According to an eighth aspect, a network side device is provided, including a communication interface. The communication interface is configured to send configuration information to a terminal, where the configuration information includes first information of time quality;
receive time quality request information sent by the terminal by using a target uplink message; and
send second information of time quality to the terminal, where
the target uplink message includes at least one of messages Msg1, Msg3, MsgA, configured grant CG physical uplink shared channel PUSCH, and service request SR.

According to a ninth aspect, a readable storage medium is provided. The readable storage medium stores a program or instructions. The program or the instructions, when executed by a processor, implement the steps of the method according to the first aspect, or implement the steps of the method according to the second aspect.

According to a tenth aspect, a wireless communication system is provided, including a terminal and a network side device, where the terminal may be configured to implement the steps of the method according to the first aspect, and the network side device may be configured to implement the steps of the method according to second aspect.

According to an eleventh aspect, a chip is provided. The chip includes a processor and a communication interface. The communication interface is coupled to the processor. The processor is configured to run a program or instructions to implement the method according to the first aspect or the method according to the second aspect.

According to a twelfth aspect, a computer program/program product is provided. The computer program/program product is stored in a storage medium. The computer program/program product is executed by at least one processor of a terminal to implement the steps of the request information reporting method according to the first aspect, or the computer program/program product is executed by at least one processor of a network side device to implement the steps of the information configuration method.

In the embodiments of this application, the terminal obtains the configuration information from the network device, where the configuration information includes the information of time quality; and the terminal sends time quality request information by using a target uplink message, where the target uplink message includes at least one of messages Msg1, Msg3, MsgA, configured grant CG physical uplink shared channel PUSCH, and service request SR. Based on that the information of time quality is already obtained, the terminal actively requests for the information of time quality by sending the time quality request information, so that the information of time quality can be properly and timely updated, thereby improving robustness of data transmission and ensuring transmission performance of a delay-sensitive service.

### BRIEF DESCRIPTION OF THE DRAWINGS

FIG. 1 is a schematic flowchart of sending assistance information UAI by a terminal;
FIG. 2 is a block diagram of a wireless communication system to which an embodiment of this application is applicable;
FIG. 3 is a flowchart of a request information reporting method according to an embodiment of the present invention;
FIG. 4 is a schematic structural diagram of a terminal according to an embodiment of the present invention;
FIG. 5 is another schematic structural diagram of a terminal according to an embodiment of the present invention;
FIG. 6 is a flowchart of an information configuration method according to an embodiment of the present invention;
FIG. 7 is a schematic structural diagram of a network device according to an embodiment of the present invention; and
FIG. 8 is another schematic structural diagram of a network device according to an embodiment of the present invention.

### DETAILED DESCRIPTION

The following clearly describes the technical solutions in embodiments of this application with reference to the accompanying drawings in the embodiments of this application. Apparently, the described embodiments are some of the embodiments of this application rather than all of the embodiments. All other embodiments obtained by a person of ordinary skill in the art based on the embodiments of this application shall fall within the protection scope of this application.

The terms such as "first" and "second" in this application are used for distinguishing between similar objects, but are not necessarily used for describing a specific order or sequence. It should be understood that terms used in such a way are interchangeable in proper circumstances, so that the embodiments of this application described herein can be implemented in other sequences than a sequence illustrated or described herein. In addition, the objects distinguished by "first" and "second" are usually of the same type, and a number of objects is not limited. For example, a number of first objects may be one or more than one. In addition, "or" in this application represents at least one of connected objects. For example, "A or B" covers three solutions, that is, solution 1: including A and excluding B; solution 2: including B and excluding A; and solution 3: including both A and B. The character "/" usually indicates an "or" relationship between the associated objects.

For convenience of understanding, some contents involved in the embodiments of the present invention are described below.

For UE assistance information (UE assistance information, UAI) reporting

In long term evolution (Long Time Evolution, LTE) and a new radio (New Radio, NR) system, a terminal sends, to report at least one of the following objectives to a network (which may be understood as that, the terminal sends the UAI to the network to make the network learn of at least one of the following information):
1. for power saving (power saving), whether it is expected to report some discontinuous reception (Discontinuous Reception, DRX) parameter values, a reduced maximum quantity of secondary carriers, a reduced maximum aggregation bandwidth, a reduced maximum quantity of multiple input multiple output (multiple input multiple output, MFMO) layers, and minimum scheduling offsets K0 and K2, where the offsets K0 and K2 refer to indication of a minimum applicable value of a scheduling offset (Indication of minimum applicable value of scheduling offset) corresponding to cross-slot scheduling;
2. whether it is expected to adjust a connected discontinuous reception (Connected Discontinuous Reception, C-DRX) period in a connected state for a delay budget report (delay budget report);
3. whether the terminal is overheating (overheating) inside;
4. whether the terminal does not expect to transmit and receive data in a near future (near future);
5. whether the terminal tends to be provided with reference time information;
6. whether it is expected to leave an RRC connected state, and an expected RRC state after leaving the RRC connected state;
7. whether it is expected to include gap (Gap)-related assistance information constructed or released for a multi-universal subscriber identity module (Multi-Universal Subscriber Identity Module, MUSIM) operation;
8. a frequency affected by in-device coexistence (In-Device Coexistence, IDC) interference;
9. reporting a Sidelink service mode (traffic pattern) in a sidelink (sidelink, SL);
10. whether the terminal satisfies a radio resource management (Radio Resource Management, RRM) measurement relaxation condition; and
11. whether the terminal is performing changing of a radio link monitoring (Radio Link Monitoring, RLM)/beam failure detection (Beam Failure Detection, BFD) relaxation state,
   the UE assistance information UAI to a network side, where the assistance information includes the following: a discontinuous reception (Discontinuous Reception, DRX)-related parameter, a secondary cell group (Secondary Cell Group, SCG) configuration, a quantity of configured secondary cells (Secondary Cells, Scells), a carrier aggregation bandwidth, a MIMO layer (layer), a minimum scheduling offset K0/K2, an RRC state (connected, inactive, or idle mode), reference time, an in-device coexistence (In-Device Coexistence, IDC) interference frequency, sidelink (sidelink, SL) service information, a radio link monitoring (Radio Link Monitoring, RLM)/bidirectional forwarding detection (Bidirectional Forwarding Detection, BFD) measurement relaxation state, whether an RRM measurement relaxation condition is satisfied, and the like.

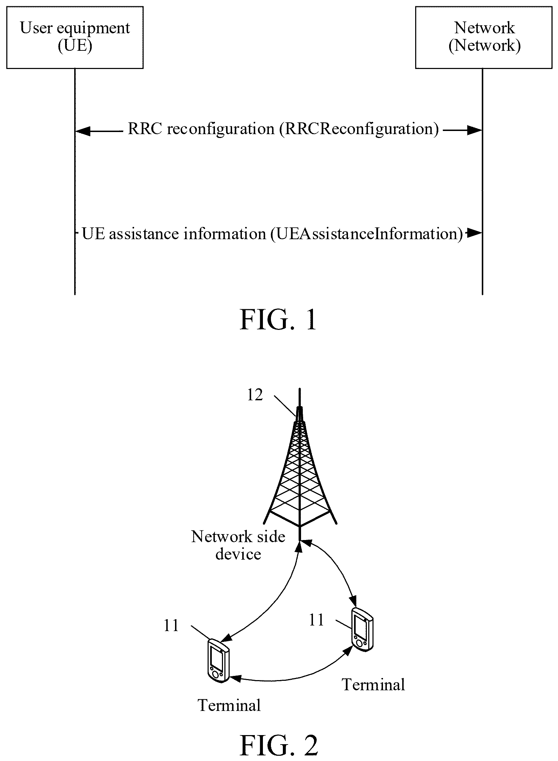

As shown in FIG. 1, a specific reporting method is carried in a UEAssistanceInformation message.

For example, the assistance information reported by the UE for the purpose of power saving defined in the current protocol includes:

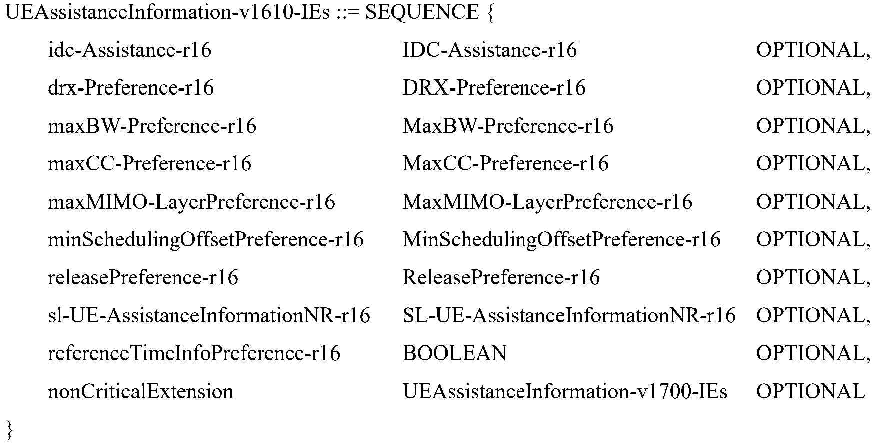

For radio resource control (Radio Resource Control, RRC) connection establishment/resume procedure

When initiating the RRC connection establishment/resume procedure, the UE adds an establishment/resume cause (establishment/resume cause) value to an RRC connection establishment/resume message, that is, reports a connection establishment/resume cause value, so that when an access attempt is allowed, an NR node (NR Node B, gNB) may further learn an access cause, and determine, based on an actual requirement of the network, whether to accept the access attempt or perform customized scheduling transmission.

A value of EstablishmentCause is as follows:

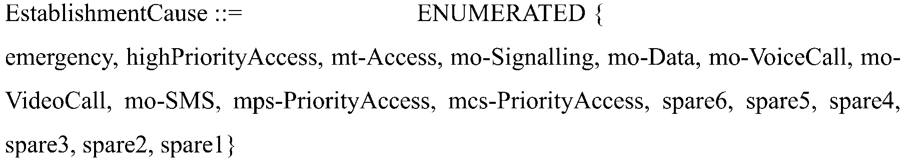

A value of ResumeCause is as follows:

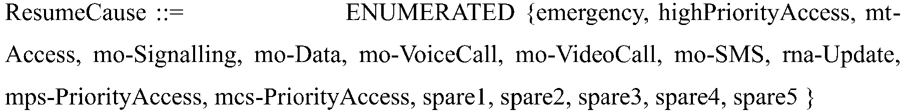

Mapping relationship between an access identity and/or an access category and an establishment cause:
1. A mapping relationship between the access identity and/or the access category and an RRC establishment cause when an N1 non-access stratum (Non-access stratum, NAS) signal connection is established through an NR connection to a 5G core network (5G Core Network, 5GCN) is shown in Table 1:

**Table 1**

| **Rule number (Rule #)** | **Access identity (Access identities)** | **Access category (Access categories)** | **RRC establishment cause (RRC establishment cause is set to)** |
|---|---|---|---|
| 1 | 1 | Any category | mps-PriorityAccess |
| 2 | 2 | Any category | mcs-PriorityAccess |
| 3 | 11, 15 | Any category | highPriorityAccess |
| 4 | 12,13,14, | Any category | highPriority Access |
| | | 0 (= MT_acc) | mt-Access |
| | | 1 (= delay tolerant) | Not applicable (NOTE 1) |
| | | 2 (= emergency) | emergency |
| | | 3 (= MO_sig) | mo-Signalling |
| | | 4 (= MO MMTel voice) | mo-VoiceCall |
| 5 | 0 | 5 (= MO MMTel video) | mo-VideoCall |
| | | 6 (= MO SMS and SMSoIP) | mo-SMS |
| | | 7 (= MO_data) | mo-Data |
| | | 9 (= MO IMS registration related signalling) | mo-Data |

2. A mapping relationship between the access identity and/or the access category and an RRC establishment cause when an N1 NAS signal connection is established through an evolved UMTS terrestrial radio access (Evolved Universal Terrestrial Radio Access, E-UTRA) connection to a 5GCN is shown in Table 2:

**Table 2**

| **Rule number (Rule** #) | **Access identity (Access identities)** | **Access category (Access categories)** | **RRC establishment cause (RRC establishment cause is set to)** |
|---|---|---|---|
| 1 | 1 | Any category | highPriorityAccess |
| 2 | 2 | Any category | highPriorityAccess |
| 3 | 11, 15 | Any category | highPriorityAccess |
| 4 | 12,13,14, | Any category | highPriority Access |
| | | 0 (= MT_acc) | mt-Access |
| | | 1 (= delay tolerant) | Not applicable (NOTE 1) |
| | | 2 (= emergency) | emergency |
| | | 3 (= MO_sig) | mo-Signalling |
| 5 | 0 | 4 (= MO MMTel voice) | mo-VoiceCall |
| | | 5 (= MO MMTel video) | mo-VoiceCall |
| | | 6 (= MO SMS and SMSoIP) | mo-Data |
| | | 7 (= MO_data) | mo-Data |
| | | 9 (= MO IMS registration related signalling) | mo-Data |

The term "indication" in this application may be a direct indication (or an explicit indication), or may be an indirect indication (or an implicit indication). The direct indication may be understood as that a sender explicitly notifies a receiver of content such as specific information, an operation that needs to be performed, or a request result in a sent indication. The indirect indication may be understood as that the receiver determines corresponding information based on an indication sent by the sender, or performs determining and determines an operation that needs to be performed, a request result, or the like based on a determining result.

It should be noted that the technology described in the embodiments of this application is not limited to a long term evolution (Long Term Evolution, LTE)/LTE-advanced (LTE-Advanced, LTE-A) system, and may be alternatively applied to another wireless communication system such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), or another system. The terms "system" and "network" in the embodiments of this application are often interchangeably used, and the technology described can be applied to the systems and radio technologies mentioned above, and can also be applied to other systems and radio technologies. The following descriptions describe a new radio (New Radio, NR) system for example purposes, and NR terminology is used in a large part of the following descriptions, but these technologies can also be applied to systems other than the NR system, such as a 6th generation (6^{th} generation, 6G) communication system.

FIG. 2 is a block diagram of a wireless communication system to which an embodiment of this application is applicable. The wireless communication system includes a terminal 11 and a network side device 12. The terminal 11 may be a terminal side device such as a mobile phone, a tablet computer (Tablet Computer), a laptop computer (Laptop Computer), a notebook computer, a personal digital assistant (Personal Digital Assistant, PDA), a palmtop computer, a netbook, an ultra-mobile personal computer (Ultra-mobile Personal Computer, UMPC), a mobile Internet device (Mobile Internet Device, MID), an augmented reality (Augmented Reality, AR)/virtual reality (Virtual Reality, VR) device, a robot, a wearable device (Wearable Device), a flight vehicle (flight vehicle), a vehicle user equipment (Vehicle User Equipment, VUE), a shipborne device, a pedestrian user terminal (Pedestrian User Equipment, PUE), a smart home appliance (a home equipment with a wireless communication function, such as a refrigerator, a television, a washing machine, or a furniture), a game console, a personal computer (Personal Computer, PC), a teller machine, or a self-service machine. The wearable device includes: a smart watch, a smart bracelet, a smart earphone, smart glasses, smart jewelry (a smart bangle, a smart wrist chain, a smart ring, a smart necklace, a smart anklet, a smart ankle chain, and the like), a smart wristband, smart clothes, and the like. The vehicle user equipment may also be referred to as an in-vehicle terminal, an in-vehicle controller, an in-vehicle module, an in-vehicle component, an in-vehicle chip, an in-vehicle unit, or the like. It should be noted that a specific type of the terminal 11 is not limited in the embodiments of this application. The network side device 12 may include an access network device or a core network device. The access network device may also be referred to as a radio access network (Radio Access Network, RAN) device, a radio access network function, or a radio access network element. The access network device may include a base station, a wireless local area network (Wireless Local Area Network, WLAN) access point (Access Point, AP), a wireless fidelity (Wireless Fidelity, Wi-Fi) node, or the like. The base station may be referred to as a NodeB (Node B, NB), an evolved NodeB (Evolved Node B, eNB), a next generation NodeB (the next generation Node B, gNB), a new radio NodeB (New Radio Node B, NR Node B), an access point, a relay base station (Relay Base Station, RBS), a serving base station (Serving Base Station, SBS), a base transceiver station (Base Transceiver Station, BTS), a radio base station, a radio transceiver, a basic service set (Basic Service Set, BSS), an extended service set (Extended Service Set, ESS), a home NodeB (home Node B, HNB), a home evolved NodeB (home evolved Node B), a transmission reception point (Transmission Reception Point, TRP), or another appropriate term in the field. Provided that the same technical effect is achieved, the base station is not limited to specific technical terms. It should be noted that only the base station in the NR system is used as an example for description in the embodiments of this application, and a specific type of the base station is not limited.

The core network device may include, but is not limited to, at least one of the following: a core network node, a core network function, a mobility management entity (Mobility Management Entity, MME), an access and mobility management function (Access and Mobility Management Function, AMF), a session management function (Session Management Function, SMF), a user plane function (User Plane Function, UPF), a policy control function (Policy Control Function, PCF), a policy and charging rules function unit (Policy and Charging Rules Function, PCRF), an edge application server discovery function (Edge Application Server Discovery Function, EASDF), unified data management (Unified Data Management, UDM), a unified data repository (Unified Data Repository, UDR), a home subscriber server (Home Subscriber Server, HSS), a centralized network configuration (Centralized network configuration, CNC), a network repository function (Network Repository Function, NRF), a network exposure function (Network Exposure Function, NEF), a local NEF (Local NEF or L-NEF), a binding support function (Binding Support Function, BSF), an application function (Application Function, AF), and the like. It should be noted that the core network device in the NR system is only used as an example for description in the embodiments of this application, and a specific type of the core network device is not limited.

A request information reporting method provided in the embodiments of this application is described below by using some embodiments and application scenarios thereof with reference to FIG. 2.

Step 201: A terminal obtains configuration information from a network device, where the configuration information includes information of time quality.

For example, a NW (a network side device) may send the information of time quality (with a version number) to an IDLE/INACTIVE UE by using a system information block (System Information Block, SIB), or send the information of time quality to a CONNECTED UE by using RRC-dedicated signaling. A manner in which the network device sends the configuration information is not specifically limited in this embodiment of the present invention.

In this embodiment of the present invention, the network device configures the information of time quality for the terminal. The information of time quality may be understood as initial information of time quality or first information of time quality.

Optionally, the configuration information further includes at least one of the following:
a random access resource configuration; a configured grant (Configured Grant, CG) physical uplink shared channel (Physical Uplink Shared Channel, PUSCH) resource configuration; and a rollback parameter, where
the random access resource configuration is dedicatedly used for sending time quality request information, and the rollback parameter is used for delaying at least one of performing an RRC connection establishment process by the terminal and triggering an RRC connection resume process.

Step 202: The terminal sends the time quality request information by using a target uplink message, where
the target uplink message includes at least one of messages Msg1, Msg3, MsgA, configured grant (Configured Grant, CG) physical uplink shared channel (Physical Uplink Shared Channel, PUSCH), and service request (scheduling request, SR).

In this embodiment of the present invention, when the terminal obtains the initial information of time quality, the terminal may further send the time quality request information by using the target uplink message. The foregoing process may be understood as that the terminal requests, by sending the time quality request information, for updating the information of time quality.

The terminal may send the time quality request information by using the target uplink message under different conditions, which may be alternatively understood as that the terminal may send the time quality request information by using the target uplink message in different manners.

### Manner 1

Optionally, before the terminal sends the time quality request information by using the target uplink message, the method includes:
performing, by the terminal, at least one of the following when a first condition is satisfied:
pushing, by an RRC layer of the terminal, a change message of the information of time quality to a NAS layer of the terminal;
triggering an RRC connection establishment process; and
triggering an RRC connection resume process, where
the first condition includes at least one of the following:
the terminal is in an IDLE state or an INACTIVE state;
the terminal is enabled to perform change processing on the information of time quality;
the information of time quality is changed; and
a UE has to-be-transmitted service data, where
the change message of the information of time quality indicates at least one of the following:
   a change of a current version of the information of time quality;
   a version of information of time quality carried in a current cell broadcast; and
   a UE identifier.

In this embodiment of the present invention, the terminal may perform at least one of the following when the terminal is in the IDLE state or the INACTIVE state, the terminal is enabled to perform change processing on the information of time quality, the information of time quality is changed, or the UE has the to-be-transmitted service data: pushing, by the RRC layer of the terminal, the change message of the information of time quality to the NAS layer of the terminal, triggering the RRC connection establishment process, or triggering the RRC connection resume process.

That the UE has to-be-transmitted service data may be that the UE has to-be-transmitted data of a service related to time synchronization. Optionally, that the UE has to-be-transmitted service data may alternatively be that an amount of the to-be-transmitted service data is greater than a configuration threshold.

The pushing, by the RRC layer of the terminal, the change message of the information of time quality to the NAS layer (a higher layer) of the terminal may be that the terminal reports indication information to the higher layer, to notify the NAS layer (the higher layer), by using the indication information, that the information of time quality is updated.

After the pushing, by the RRC layer of the terminal, the change message of the information of time quality to the NAS layer of the terminal, the triggering the RRC connection establishment process, or the triggering the RRC connection resume process is performed, the terminal sends the time quality request information by using the target uplink message. It may be understood as that, that the terminal sends the time quality request information by using the target uplink message is triggered after the pushing, by the RRC layer of the terminal, the change message of the information of time quality to the NAS layer of the terminal, the triggering the RRC connection establishment process, or the triggering the RRC connection resume process.

Optionally, that the terminal sends the time quality request information by using the target uplink message when the terminal performs the triggering the RRC connection establishment process or the triggering the RRC connection resume process includes any one of the following:
sending the time quality request information by using the target uplink message after the terminal performs the triggering the RRC connection establishment process; or
sending the time quality request information by using the target uplink message after the terminal performs the triggering the RRC connection resume process.

In this embodiment of the present invention, that the terminal sends the time quality request information by using the target uplink message may be after the terminal triggers the RRC connection establishment/resume process.

Optionally, before the terminal sends the time quality request information by using the target uplink message, the method includes at least one of the following:
determining, by the terminal according to the configuration information, that the target uplink message is any one of the messages Msg1, Msg3, MsgA, and CG PUSCH; and
generating, by the terminal, the time quality request information.

In this embodiment of the present invention, the terminal may specifically determine, according to the configuration information sent by the network device, any one of the messages Msg1, Msg3, MsgA, and CG PUSCH as the target uplink message for sending the time quality request information. The terminal correspondingly generates the time quality request information based on a type of the target uplink message.

Optionally, that the terminal sends the time quality request information by using the target uplink message includes any one of the following:
sending, by the terminal, any one of the Msg3, the MsgA, or the CG PUSCH, where the any one of the Msg3, the MsgA, or the CG PUSCH carries a cause value, and the cause value is used for indicating a request for the information of time quality;
sending, by the terminal, any one of the messages Msg3, MsgA, and CG PUSCH, where the any one of the messages Msg3, MsgA, and CG PUSCH is multiplexed to transmit the time quality request information; or
sending, by the terminal, the message Msg1, where the message Msg1 is transmitted by using a preset random access resource.

In this embodiment of the present invention, it may be understood as that when the target uplink message is any one of the Msg3, the MsgA, or the CG PUSCH, the terminal sets the cause value, and the cause value is used for indicating the request for the information of time quality; or when the target uplink message is any one of the messages Msg3, MsgA, and CG PUSCH, the terminal multiplexes the target uplink message to transmit the time quality request information, or when the target uplink message is the Msg1, the terminal transmits the Msg1 by using the preset random access resource (or understood as a specific random access resource). The network device receives the Msg1 by using the preset random access resource, and the network device may learn, based on the preset random access resource, that the terminal needs to update the information of time quality. It may be understood as that, transmission of the Msg1 by using the preset random access resource implicitly indicates the time quality request information.

In the related art, when initiating the RRC connection establishment/resume procedure, the UE reports a connection establishment/resume cause value. As shown in Table 1 and Table 2, the cause value does not include a cause related to the information of time quality. As a result, the network cannot learn that the terminal in the IDLE/INACTIVE state establishes/resumes an RRC connection because the terminal needs to update the information of time quality. Consequently, the network cannot update a time quality configuration for the UE in time.

In this embodiment of the present invention, in an optional solution, when the target uplink message is any one of the Msg3, the MsgA, or the CG PUSCH, the terminal sets the cause value, and the cause value is used for indicating the request for the information of time quality. Reporting of the cause value may be performed in a process of reporting the RRC connection establishment/resume cause value, which may be understood as that a new cause value is added based on Table 1 and Table 2, to indicate a request for the information of time quality, to request the network device to update the information of time quality. The terminal in the IDLE/INACTIVE state performs the request for the information of time quality in a process of triggering the RRC connection establishment/resume, so that the network device can learn in time that the information of time quality needs to be updated for current RRC connection establishment/resume, or the network device can learn in time that current RRC connection establishment/resume is for updating the information of time quality, to update a time quality configuration for the UE in time, thereby improving timed transmission accuracy.

It may be understood that, that the time quality request information is indicated by setting the cause value is not limited to performing a process of reporting the RRC connection establishment/resume cause value, and may alternatively be that the cause value is set in another uplink process.

In this embodiment of the present invention, in another optional solution, when the target uplink message is any one of the messages Msg3, MsgA, and CG PUSCH, the terminal multiplexes the target uplink message to transmit the time quality request information. That the terminal sends the time quality request information by using any one of the Msg3, the MsgA, or the CG PUSCH may be performed in an RRC connection establishment/resume process triggered based on a requirement of the request for the information of time quality, or may be performed in an RRC connection establishment/resume process triggered for another reason. The multiplexing may be understood as that, in a process in which the terminal executes the target uplink message (any one of the Msg3, the MsgA, or the CG PUSCH), the time quality request information is also carried, so that signaling overhead can be reduced and a signaling design can be simplified.

In this embodiment of the present invention, in another optional solution, the message Msg1 is transmitted by using the preset random access resource, so that the time quality request information is implicitly indicated, and the signaling overhead for the request for the information of time quality can also be reduced.

Optionally, when the terminal is enabled to perform change processing on the information of time quality, the method further includes:
indicating, by the NAS layer of the terminal, enabling information to the RRC layer of the terminal; or
obtaining, by the RRC layer of the terminal, enabling information by using network side signaling, where
the enabling information is used for enabling the RRC layer of the terminal to perform at least one of the following:
   monitoring a change of the information of time quality;
   generating the time quality request information; and
   reporting the time quality request information.

For example, the request information reporting method may be performed in the following scenarios.

Scenario 1: When the UE is in the IDLE state/INACTIVE state, if configured/instructed/enabled by a higher layer of the UE to perform change detection of the information of time quality/perform update of the information of time quality, the UE performs detection of the information of time quality/determines whether the information of time quality is updated. Alternatively, when satisfying the first condition, the UE performs at least one of the following:
(1) Indication information (for example, the information of time quality is updated) is reported to the higher layer, and after receiving the indication information, the higher layer of the UE requests the RRC layer to perform the RRC connection establishment/resume process, to perform one of the following.

The higher layer of the UE indicates an access category/an access identity (Identity, ID), and the access category/ID is used for indicating that the RRC connection establishment/resume process is used for an update request of the information of time quality.

The higher layer of the UE triggers reporting of RRC UAI/a media access control control element (Media Access Control Control Element, MAC CE)/a logical channel identification (Logical Channel Identification, LCID) subheader (subheader), and the UAI/MAC CE/LCID subheader carries information of the update request of the information of time quality. Additionally, the UE may further trigger a small data transmission process.

(2) Indication information (for example, the information of time quality is updated) is reported to the higher layer. The RRC layer triggers the RRC connection establishment/resume process, including at least one of the following.

The UE selects a random access resource (a preamble resource, or a random access occasion resource) suitable for an update request of the information of time quality, to initiate a random access process. Additionally, the NW may further configure a corresponding random access priority parameter (for example, a preamble target transmit power, a power climbing step, or a backoff indicator (backoff indicator)) for the resource.

The UE triggers reporting of RRC UAI/a MAC CE/an LCID subheader, and the UAI/MAC CE/LCID subheader carries information of the update request of the information of time quality. Additionally, the UE may further trigger a small data transmission process.

For the backoff indicator (backoff indicator, BI), the network device indicates a time range to the terminal by using the BI, and UEs separately select (following a uniform distribution function) a moment (backoff time) from the time range, and then perform random access (Random Access, RA) resource selection, to avoid data transmission collisions of (between) UEs.

(3) The NW may further configure a backoff parameter by using a SIB, or the higher layer of the UE provides a backoff parameter, and the RRC layer triggers, according to the backoff parameter, the RRC connection establishment/resume process after backing off for a period of time.

For example, the scenario 1, specifically applied to the IDLE UE, may be further divided into a scenario 1-1:
When the UE is in the IDLE state, if configured/instructed/enabled by the higher layer of the UE to perform change detection of the information of time quality/perform update of the information of time quality, the UE performs detection of the information of time quality/determines whether the information of time quality is updated. Alternatively, when satisfying the first condition, the UE performs at least one of the following:
The indication information (for example, the information of time quality is updated) is reported to the higher layer, after receiving the indication information, the higher layer of the UE requests the RRC layer to perform the RRC connection establishment process, and optionally, the higher layer of the UE indicates the access category/access ID, where the access category/ID is used for indicating that the RRC connection establishment/resume process is used for the update request of the information of time quality;
according to the access category/access ID indicated by the higher layer of the UE, where the access category/ID is used for indicating that the RRC connection establishment process is used for the update request of the information of time quality, a corresponding establishment (setup) cause value is set; and
the higher layer of the UE provides the backoff parameter, and the RRC layer triggers, according to the backoff parameter, the RRC connection establishment process after backing off for a period of time, where
the first condition includes: the terminal finds that the information of time quality is changed.

For example, the scenario 1, specifically applied to the INACTIVE UE, may be further divided into a scenario 1-2:
When the UE is in the INACTIVE state, if configured/instructed/enabled by the higher layer of the UE to perform change detection of the information of time quality/perform change of the information of time quality, the UE performs detection of the information of time quality/determines whether the information of time quality is updated. Alternatively, when satisfying the first condition, the UE performs:
reporting the indication information (for example, the information of time quality is updated) to the higher layer; and
triggering, by the RRC layer, the RRC connection resume process, and setting a corresponding resume cause value, used for the update request of the information of time quality, where
the first condition includes: the terminal finds that the information of time quality is changed and the terminal has the to-be-transmitted service data, where the service data is the data of the service related to time synchronization.

Scenario 2: When the UE is in the IDLE state/INACTIVE state, if configured/instructed/enabled by the higher layer of the UE to perform change detection of the information of time quality/perform update of the information of time quality, and instructed not to trigger the RRC connection establishment/resume process based on the information of the update request of the information of time quality, when satisfying the first condition, the UE performs at least one of the following:
(1) reporting the indication information (i.e. the information of time quality is updated) to the higher layer; and
(2) generating UAI reporting/MAC CE/LCID subheader reporting information when an uplink shared channel (Uplink Shared Channel, UL-SCH) resource that can accommodate a size of the UAI reporting/MAC CE/LCID subheader reporting information or an ongoing (ongoing) small data transmission (small data transmission, SDT) process exists, where the information carries the information of the update request of the information of time quality.

### Manner 2

Optionally, before the terminal sends the time quality request information by using the target uplink message, the method includes:
performing, by the terminal, at least one of the following when a second condition is satisfied:
triggering reporting of the time quality request information;
reporting the time quality request information.

The second condition includes at least one of the following:
the terminal is in a connected CONNECTED state;
the terminal is enabled to perform change processing on information of time quality;
the information of time quality is changed; and
a UE has to-be-transmitted service data.

In this embodiment of the present invention, when at least one of that the terminal is in the connected CONNECTED state, the terminal is enabled to perform change processing on the information of time quality, the information of time quality is changed, and the UE has the to-be-transmitted service data is satisfied, the terminal may perform at least one of the following: triggering the reporting of the time quality request information, and reporting the time quality request information.

That the UE has to-be-transmitted service data may be that the UE has to-be-transmitted data of a service related to time synchronization. Optionally, that the UE has to-be-transmitted service data may alternatively be that an amount of the to-be-transmitted service data is greater than a configuration threshold.

After the terminal performs the triggering reporting of the time quality request information and the reporting the time quality request information, the terminal sends the time quality request information by using the target uplink message. It may be understood as that, that the terminal sends the time quality request information by using the target uplink message is triggered after a process of the triggering reporting of the time quality request information or the reporting the time quality request information.

Optionally, before the terminal sends the time quality request information by using the target uplink message, the method further includes:
generating the time quality request information when a size of an uplink shared channel resource corresponding to the target uplink message is greater than or equal to a size of the time quality request information.

In this embodiment of the present invention, that the size of the uplink shared channel resource corresponding to the target uplink message is greater than or equal to the size of the time quality request information may be understood as that the size of the uplink shared channel resource corresponding to the target uplink message can accommodate the size of the time quality request information. Only when the size of the uplink shared channel resource is available/sufficient, the terminal generates the time quality request information, to report the generated time quality request information on the target uplink message.

It may be understood that the size of the time quality request information is a fixed value or a value determined based on a configuration (an implicit or explicit configuration indicating the size of the time quality request information) on a network side. Therefore, the size of the time quality request information may be compared with the size of the uplink shared channel resource before the time quality request information is generated.

Optionally, the time quality request information is reported, and the method further includes:
determining that the target uplink message is the SR if a first SR resource exists when the size of the uplink shared channel resource corresponding to the target uplink message is less than the size of the time quality request information; and
sending the time quality request information by using the target uplink message.

In this embodiment of the present invention, that the size of the uplink shared channel resource corresponding to the target uplink message is less than the size of the time quality request information may be understood as that the size of the uplink shared channel resource corresponding to the target uplink message cannot/is insufficient to accommodate the size of the time quality request information. When the size of the uplink shared channel resource is unavailable/insufficient, whether the first SR resource exists is further determined. When the first SR resource exists, the SR is sent by using the first SR resource. The SR is used for sending the time quality request information.

The first SR resource may be understood as an SR resource used for sending the time quality request information, or may be understood as that the SR implements a request for the information of time quality by using a specific resource.

Optionally, after the terminal sends the time quality request information by using the target uplink message, the method includes:
canceling the triggered reporting of the time quality request information.

In this embodiment of the present invention, after the terminal sends the time quality request information by using the target uplink message, for example, after the terminal sends the time quality request information by using a media access control protocol data unit (Media Access Control Protocol Data Unit, MAC PDU) or the first SR resource, the triggered reporting of the time quality request information is canceled, and no repeated request is performed before the reporting of the time quality request information is triggered again. In other words, the terminal no longer reports the time quality request information after reporting the time quality request information unless the reporting of the time quality request information is triggered again.

Optionally, when the terminal is enabled to perform change processing on the information of time quality, the method further includes:
indicating, by the NAS layer of the terminal, enabling information to the RRC layer of the terminal; or
obtaining, by the RRC layer of the terminal, enabling information by using network side signaling, where
the enabling information is used for enabling the RRC layer of the terminal to perform at least one of the following:
   monitoring a change of the information of time quality;
   generating the time quality request information; and
   reporting the time quality request information.

For example, the request information reporting method may alternatively be performed in the following scenario.

Scenario 3: When the UE is in the CONNECTED state, if configured/instructed/enabled by the higher layer of the UE to perform change detection of the information of time quality/perform update of the information of time quality, or the NW configures/instructs/enables performing change detection of the information of time quality/performing update of the information of time quality, the UE performs detection of the information of time quality/determines whether the information of time quality is updated, or the UE performs at least one of the following when the UE satisfies the second condition:
(1) reporting the indication information (i.e. the information of time quality is updated) to the higher layer; and
(2) triggering the update request of the information of time quality, and performing at least one of the following:
   generating and sending UAI reporting/MAC CE/LCID subheader reporting information when an UL-SCH resource that can accommodate a size of the UAI reporting/MAC CE/LCID subheader reporting information exists, where the information carries the information of the update request of the information of time quality; and
   sending an SR if no UL-SCH resource exists but a first SR resource exists. The SR resource may be used for the update request of the information of time quality.

If a MAC PDU carrying the information of the update request of the information of time quality sends, or sends by using the first SR resource, the SR, the triggering of the update request of the information of time quality is canceled.

For example, the scenario 3, specifically applied to the CONNECTED UE, may be further divided into a scenario 3-1:
When the UE is in the CONNECTED state, if configured/instructed/enabled by the higher layer of the UE to perform change detection of the information of time quality/perform update of the information of time quality, or the NW configures/instructs/enables performing change detection of the information of time quality/performing update of the information of time quality, the UE performs detection of the information of time quality/determines whether the information of time quality is updated, or the UE performs at least one of the following when the UE satisfies the first condition:
(1) reporting the indication information (i.e. the information of time quality is updated) to the higher layer; and
(2) triggering the update request of the information of time quality, and performing at least one of the following:
   generating and sending the UAI reporting/MAC CE/LCID subheader reporting information when the UL-SCH resource that can accommodate the size of the UAI reporting/MAC CE/LCID subheader reporting information exists, where the information carries the information of the update request of the information of time quality; and
   sending the SR if no UL-SCH resource exists but the first SR resource exists. The SR resource may be used for the update request of the information of time quality.

If the MAC PDU carrying the information of the update request of the information of time quality sends, or sends by using the first SR resource, the SR, the triggering of the update request of the information of time quality is canceled.

The first condition includes: the terminal finds that the information of time quality is changed and the terminal has the to-be-transmitted service data, where the service data is the data of the service related to time synchronization.

According to the request information reporting method provided in the embodiments of this application, the terminal obtains the configuration information from the network device, where the configuration information includes the information of time quality; and the terminal sends time quality request information by using a target uplink message, where the target uplink message includes at least one of messages Msg1, Msg3, MsgA, configured grant CG physical uplink shared channel PUSCH, and service request SR. Based on that the information of time quality is already obtained, the terminal actively requests for the information of time quality by sending the time quality request information, so that the information of time quality can be properly and timely updated, thereby improving robustness of data transmission and ensuring transmission performance of a delay-sensitive service.

The request information reporting method provided in the embodiments of this application may be performed by a terminal. In this embodiment of this application, a terminal provided in this embodiment of this application is described by using an example in which the terminal performs the request information reporting method.

The terminal includes:
a first receiving module, configured to obtain configuration information from a network device, where the configuration information includes information of time quality; and
a first sending module, configured to send time quality request information by using a target uplink message, where
the target uplink message includes at least one of messages Msg1, Msg3, MsgA, configured grant CG physical uplink shared channel PUSCH, and service request SR.

Optionally, the terminal further includes:
a first execution module, configured to perform at least one of the following when a first condition is satisfied:
pushing, by an RRC layer of the terminal, a change message of the information of time quality to a NAS layer of the terminal;
triggering an RRC connection establishment process; and
triggering an RRC connection resume process, where
the first condition includes at least one of the following:
   the terminal is in an IDLE state or an INACTIVE state;
   the terminal is enabled to perform change processing on the information of time quality;
   the information of time quality is changed; and
   a UE has to-be-transmitted service data, where
   the change message of the information of time quality indicates at least one of the following:
      a change of a current version of the information of time quality;
      a version of information of time quality carried in a current cell broadcast; and
      a UE identifier.

Optionally, when the terminal performs the triggering the RRC connection establishment process or the triggering the RRC connection resume process, the first sending module includes any one of the following:
a first sending submodule, configured to send the time quality request information by using the target uplink message after the terminal performs the triggering the RRC connection establishment process; or
a second sending submodule, configured to send the time quality request information by using the target uplink message after the terminal performs the triggering the RRC connection resume process.

Optionally, the configuration information further includes at least one of the following:
a random access resource configuration;
a CG PUSCH resource configuration; and
a rollback parameter, where
the random access resource configuration is dedicatedly used for sending the time quality request information, and the rollback parameter is used for delaying at least one of performing the RRC connection establishment process by the terminal and triggering the RRC connection resume process.

Optionally, the terminal includes at least one of the following:
a first determination module, configured to determine, according to the configuration information, that the target uplink message is any one of the messages Msg1, Msg3, MsgA, and CG PUSCH; and
a first generation module, configured to send the time quality request information.

Optionally, the first sending module includes any one of the following:
a third sending submodule, configured to send any one of the Msg3, the MsgA, or the CG PUSCH, where the any one of the Msg3, the MsgA, or the CG PUSCH carries a cause value, and the cause value is used for indicating a request for the information of time quality;
a fourth sending submodule, configured to send any one of the messages Msg3, MsgA, and CG PUSCH, where the any one of the messages Msg3, MsgA, and CG PUSCH is multiplexed to transmit the time quality request information; or
a fifth sending submodule, configured to send the message Msg1, where the message Msg1 is transmitted by using a preset random access resource.

Optionally, the terminal includes:
a second execution module, configured to trigger reporting of the time quality request information when a second condition is satisfied; or
the first sending module includes:
   a sixth sending submodule, configured to send the time quality request information by using the target uplink message when a second condition is satisfied.

The second condition includes at least one of the following:
the terminal is in a connected CONNECTED state;
the terminal is enabled to perform change processing on the information of time quality;
the information of time quality is changed; and
a UE has to-be-transmitted service data.

Optionally, the terminal further includes:
a second generation module, configured to generate the time quality request information when a size of the uplink shared channel resource corresponding to the target uplink message is greater than or equal to a size of the time quality request information.

Optionally, the first sending module includes:
a second determining module, configured to determine that the target uplink message is the SR if a first SR resource exists when the size of the uplink shared channel resource corresponding to the target uplink message is less than the size of the time quality request information; and
a seventh sending submodule, configured to send the time quality request information by using the target uplink message.

Optionally, the terminal further includes:
a cancel module, configured to cancel the triggered reporting of the time quality request information.

Optionally, when the terminal is enabled to perform change processing on the information of time quality, the terminal further includes:
an indication module, configured for the NAS layer of the terminal to indicate enabling information to the RRC layer of the terminal; or
an obtaining module, configured for the RRC layer of the terminal to obtain enabling information by using network side signaling, where
the enabling information is used for enabling the RRC layer of the terminal to perform at least one of the following:
   monitoring a change of the information of time quality;
   generating the time quality request information; and
   reporting the time quality request information.

It should be noted that the terminal provided in this embodiment of the present invention is a terminal that can perform the request information reporting method. All implementations in the above request information reporting method embodiments are applicable to the terminal, and can achieve the same or similar beneficial effects. To avoid repeated descriptions, details are not described again in this embodiment.

The terminal in the embodiments of this application may be an electronic device, for example, an electronic device having an operating system, or may be a component in the electronic device, for example, an integrated circuit or a chip. The electronic device may be the terminal, or may be another device other than the terminal. For example, the terminal may include, but is not limited to, the above listed types of the terminal 11, and the another device may be a server, a network attached storage (Network Attached Storage, NAS), or the like. This is not specifically limited in the embodiments of this application.

The terminal provided in the embodiments of this application can implement the various processes implemented in the method embodiments in FIG. 1 to FIG. 3 and achieve the same technical effect. To avoid repetition, details are not described herein again.

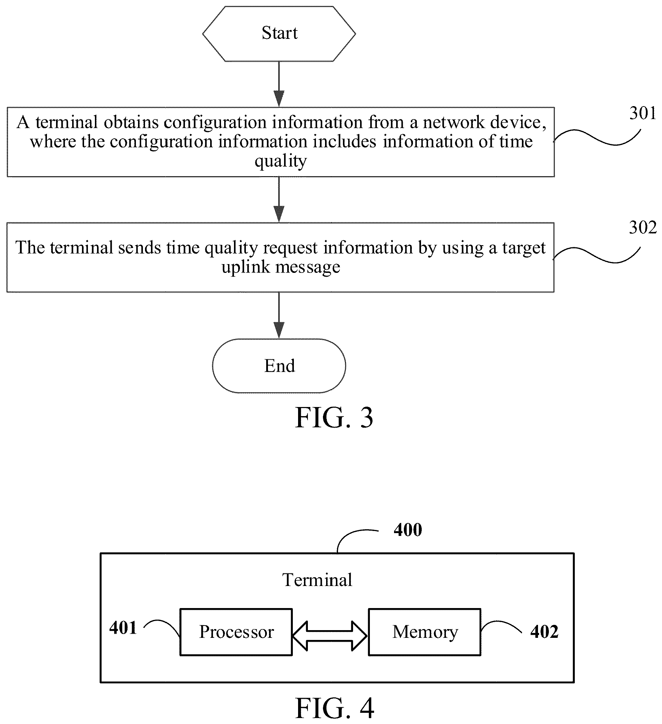

As shown in FIG. 4, an embodiment of this application further provides a communication device 400, including a processor 401 and a memory 402. The memory 402 stores a program or instructions runnable on the processor 401. For example, when the communication device 400 is a terminal, the program or the instructions, when executed by the processor 401, implement the steps of the request information reporting method embodiments, and can achieve the same technical effect. When the communication device 400 is a network side device, the program or instructions, when executed by the processor 401, implement the steps of the request information reporting method embodiments, and can achieve the same technical effect. To avoid repetition, details are not described herein again.

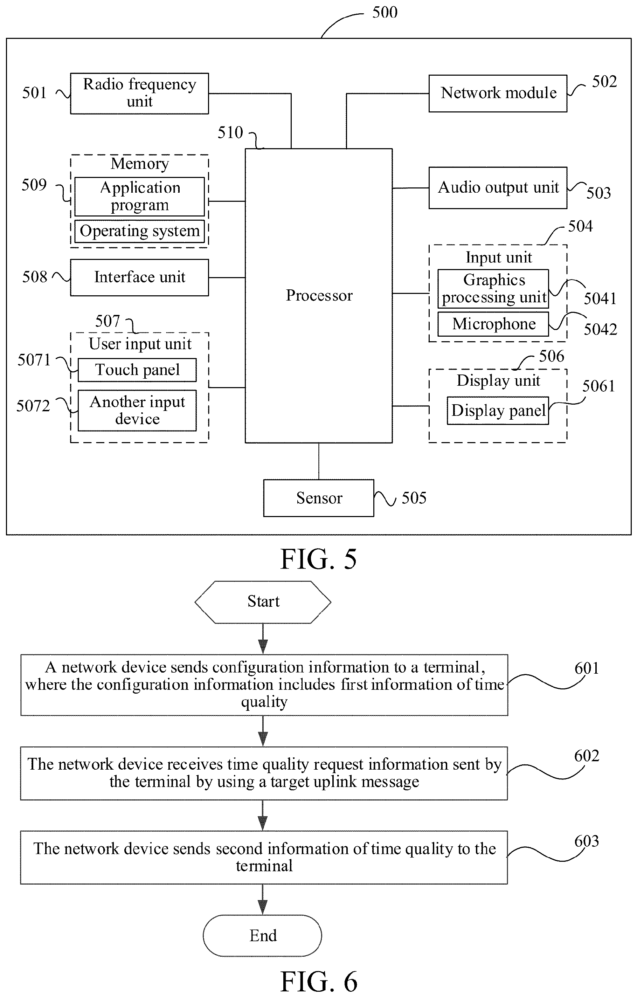

An embodiment of this application further provides a terminal, including a processor and a communication interface. The communication interface is coupled to the processor, and the processor is configured to run a program or instructions to implement the steps of the method embodiments in FIG. 3. The terminal embodiment is corresponding to the foregoing terminal side method embodiment. Each implementation process and implementation of the foregoing method embodiment may be applied to the terminal embodiment, and the same technical effect can be achieved. Specifically, FIG. 5 is a schematic diagram of a hardware structure of a terminal implementing an embodiment of this application.

The terminal 500 includes, but is not limited to, at least some of components such as a radio frequency unit 501, a network module 502, an audio output unit 503, an input unit 504, a sensor 505, a display unit 506, a user input unit 507, an interface unit 508, a memory 509, and a processor 510.

A person skilled in the art can understand that the terminal 500 may further include a power supply (for example, a battery) that supplies power to each component. The power supply may be logically connected to the processor 510 by using a power supply management system, to implement functions such as charging and discharging management and power consumption management by using the power supply management system. The structure of the terminal shown in FIG. 5 does not constitute any limitation on the terminal. The terminal may include more or fewer components than those shown in the figure, or some components may be combined, or a different component arrangement may be used. Details are not described herein again.

It should be noted that in this embodiment of this application, the input unit 504 may include a graphics processing unit (Graphics Processing Unit, GPU) 5041 and a microphone 5042. The graphics processing unit 5041 performs processing on image data of a static picture or a video that is obtained by an image acquisition device (for example, a camera) in a video acquisition mode or an image acquisition mode. The display unit 506 may include a display panel 5061, and the display panel 5061 may be configured in a form such as a liquid crystal display or an organic light emitting diode. The user input unit 507 includes at least one of a touch panel 5071 and another input device 5072. The touch panel 5071 is also referred to as a touch screen. The touch panel 5071 may include two parts: a touch detection apparatus and a touch controller. The another input device 5072 may include, but is not limited to, a physical keyboard, a function key (for example, a volume control key and a switch key), a trackball, a mouse, and an operating rod. Details are not described herein again.

In this embodiment of this application, the radio frequency unit 501 receives downlink data from the network side device and then transmits the downlink data to the processor 510 for processing. In addition, the radio frequency unit 501 may send uplink data to the network side device. Generally, the radio frequency unit 501 includes, but is not limited to, an antenna, an amplifier, a transceiver, a coupler, a low noise amplifier, a duplexer, and the like.

The memory 509 may be configured to store a software program or instructions, and various data. The memory 509 may mainly include a first storage area storing a program or instructions and a second storage area storing data. The first storage area may store an operating system, an application program or instructions required by at least one function (for example, a sound playback function and an image display function), and the like. Besides, the memory 509 may be a volatile memory or a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (enhanced SDRAM, ESDRAM), a synchronous link dynamic random access memory (Synch link DRAM, SLDRAM), and a direct rambus random access memory (Direct Rambus RAM, DR RAM). The memory 509 in this embodiment of this application includes, but is not limited to, these and any other suitable types of memories.

The processor 510 may include one or more processing units. Optionally, the processor 510 integrates an application processor and a modem processor, where the application processor mainly processes operations involving an operating system, a user interface, an application program, and the like, and the modem processor mainly processes a wireless communication signal, for example, a baseband processor. It may be understood that the modem processor may alternatively not be integrated into the processor 510.

The radio frequency unit 501 is configured to obtain configuration information from a network device, where the configuration information includes information of time quality; and
send time quality request information by using a target uplink message, where
the target uplink message includes at least one of messages Msg1, Msg3, MsgA, configured grant CG physical uplink shared channel PUSCH, and service request SR.

It may be understood that, for an implementation process of each implementation mentioned in this embodiment, reference may be made to related descriptions in the method embodiments, and the same or corresponding technical effect can be achieved. To avoid repetition, details are not described herein again.

An information configuration method provided in the embodiments of this application is described below by using some embodiments and application scenarios thereof with reference to FIG. 6. The information configuration method includes the following steps.

Step 601: A network device sends configuration information to a terminal, where the configuration information includes first information of time quality.

Step 602: The network device receives time quality request information sent by the terminal by using a target uplink message.

Step 603: The network device sends second information of time quality to the terminal, where
the target uplink message includes at least one of messages Msg1, Msg3, MsgA, configured grant CG physical uplink shared channel PUSCH, and service request SR.

Optionally, step 602 includes any one of the following:
receiving, after the terminal performs triggering an RRC connection establishment process, the time quality request information sent by the terminal by using the target uplink message; or
receiving, after the terminal performs triggering an RRC connection resume process, the time quality request information sent by the terminal by using the target uplink message.

Optionally, the configuration information further includes at least one of the following:
a random access resource configuration;
a CG PUSCH resource configuration; and
a rollback parameter, where
the random access resource configuration is dedicatedly used for sending the time quality request information, and the rollback parameter is used for delaying at least one of performing the RRC connection establishment process by the terminal and triggering the RRC connection resume process.

Optionally, step 602 includes any one of the following:
receiving any one of the Msg3, the MsgA, or the CG PUSCH sent by the terminal, where the any one of the Msg3, the MsgA, or the CG PUSCH carries a cause value, and the cause value is used for indicating a request for the information of time quality;
receiving any one of the messages Msg3, MsgA, and CG PUSCH sent by the terminal, where the any one of the messages Msg3, MsgA, and CG PUSCH is multiplexed to transmit the time quality request information; or
receiving the message Msg1 sent by the terminal, where the message Msg1 is transmitted by using a preset random access resource.

Optionally, the method further includes:
sending, by the network device, enabling information to the terminal, where
the enabling information is used for enabling an RRC layer of the terminal to perform at least one of the following:
   monitoring a change of the information of time quality;
   generating the time quality request information; and
   reporting the time quality request information.

It should be noted that as an implementation of the method of the network device corresponding to the embodiment shown in FIG. 3, a specific implementation of this embodiment may refer to related descriptions in the embodiment shown in FIG. 3. To avoid repeated descriptions, details are not described again in this embodiment.

The information configuration method in this embodiment of this application includes: sending, by a network device, configuration information to a terminal, where the configuration information includes first information of time quality; receiving, by the network device, time quality request information sent by the terminal by using a target uplink message; and sending, by the network device, second information of time quality to the terminal, where the target uplink message includes at least one of messages Msg1, Msg3, MsgA, configured grant CG physical uplink shared channel PUSCH, and service request SR. Based on that the information of time quality is already obtained, the terminal actively requests for the information of time quality by sending the time quality request information, and the network device sends, based on the request of the terminal, updated second information of time quality to the terminal, so that the information of time quality can be properly and timely updated, thereby improving robustness of data transmission and ensuring transmission performance of a delay-sensitive service.

The information configuration method provided in this embodiment of this application may be performed by a network device. In this embodiment of this application, the network device provided in the embodiments of this application is described below by using an example in which the network device performs the information configuration method. The network device includes:
a second sending module, configured to send configuration information to a terminal, where the configuration information includes first information of time quality;
a second receiving module, configured to receive time quality request information sent by the terminal by using a target uplink message; and
a third sending module, configured to send second information of time quality to the terminal, where
the target uplink message includes at least one of messages Msg1, Msg3, MsgA, configured grant CG physical uplink shared channel PUSCH, and service request SR.

Optionally, the second receiving module includes any one of the following:
a first receiving submodule, configured to receive, after the terminal performs triggering an RRC connection establishment process, the time quality request information sent by the terminal by using the target uplink message; or
a second receiving submodule, configured to receive, after the terminal performs triggering an RRC connection resume process, the time quality request information sent by the terminal by using the target uplink message.

Optionally, the configuration information further includes at least one of the following:
a random access resource configuration;
a CG PUSCH resource configuration; and
a rollback parameter, where
the random access resource configuration is dedicatedly used for sending the time quality request information, and the rollback parameter is used for delaying at least one of performing the RRC connection establishment process by the terminal and triggering the RRC connection resume process.

Optionally, the second receiving module includes any one of the following:
a third receiving submodule, configured to receive any one of the Msg3, the MsgA, or the CG PUSCH sent by the terminal, where the any one of the Msg3, the MsgA, or the CG PUSCH carries a cause value, and the cause value is used for indicating a request for the information of time quality;
a fourth receiving submodule, configured to receive any one of the messages Msg3, MsgA, and CG PUSCH sent by the terminal, where the any one of the messages Msg3, MsgA, and CG PUSCH is multiplexed to transmit the time quality request information; or
a fifth receiving submodule, configured to receive the message Msg1 sent by the terminal, where the message Msg1 is transmitted by using a preset random access resource.

Optionally, the network device includes:
a fourth sending module, configured to send enabling information to the terminal, where
the enabling information is used for enabling an RRC layer of the terminal to perform at least one of the following:
   monitoring a change of the information of time quality;
   generating the time quality request information; and
   reporting the time quality request information.

The network device in the embodiments of this application may be an electronic device, for example, an electronic device having an operating system, or may be a component in the electronic device, for example, an integrated circuit or a chip. The electronic device may be another device other than the terminal. For example, the terminal may include, but is not limited to, the above listed types of the terminal 11, and the another device may be a server, a network attached storage (Network Attached Storage, NAS), or the like. This is not specifically limited in the embodiments of this application.

The network device provided in the embodiments of this application can implement various processes implemented in the method embodiment in FIG. 6 and achieve the same technical effect. To avoid repetition, details are not described herein again.

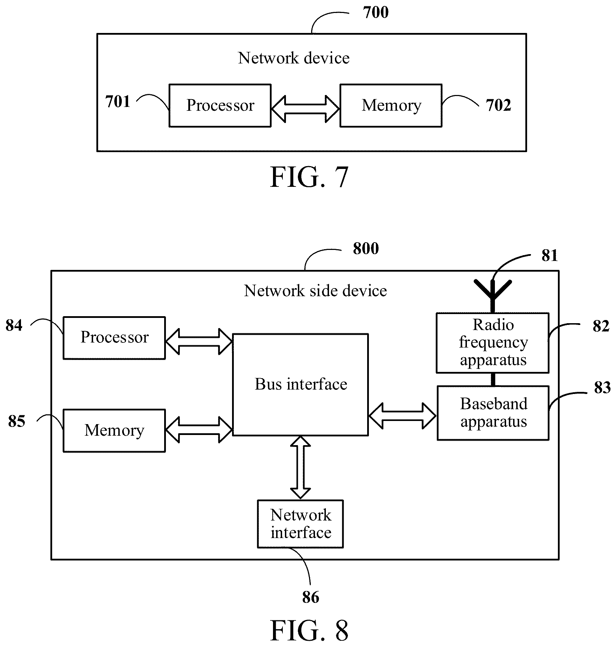

As shown in FIG. 7, an embodiment of this application further provides a communication device 700, including a processor 701 and a memory 702. The memory 702 stores a program or instructions runnable on the processor 701. For example, when the communication device 700 is a terminal, the program or the instructions, when executed by the processor 701, implement the steps of the information configuration method embodiment, and can achieve the same technical effect. When the communication device 700 is a network side device, the program or the instructions, when executed by the processor 701, implement the steps of the information configuration method embodiment, and can achieve the same technical effect. To avoid repetition, details are not described herein again.

An embodiment of this application further provides a network side device, including a processor and a communication interface. The communication interface is coupled to the processor, and the processor is configured to run a program or instructions to implement the steps of the method embodiment in FIG. 6. The network side device embodiment corresponds to the network side device method embodiment. The implementation processes and implementations in the method embodiment may all be applicable to the network side device embodiment, and the same technical effect can be achieved.

Specifically, an embodiment of this application further provides a network side device. As shown in FIG. 8, a network side device 800 includes an antenna 81, a radio frequency apparatus 82, a baseband apparatus 83, a processor 84, and a memory 85. The antenna 81 is connected to the radio frequency apparatus 82. In an uplink direction, the radio frequency apparatus 82 receives information through the antenna 81, and sends the received information to the baseband apparatus 83 for processing. In a downlink direction, the baseband apparatus 83 processes to-be-sent information, and sends the information to the radio frequency apparatus 82; and the radio frequency apparatus 82 processes the received information and then sends the information through the antenna 81.

The method performed by the network side device in the foregoing embodiment may be implemented in the baseband apparatus 83, and the baseband apparatus 83 includes a baseband processor.

The baseband apparatus 83 may, for example, include at least one baseband board. A plurality of chips are arranged on the baseband board. As shown in FIG. 8, one of the chips is, for example, the baseband processor connected to the memory 85 through a bus interface to invoke a program in the memory 85, so as to execute the network device operation shown in the method embodiment.

The network side device may further include a network interface 86, and the interface is, for example, a common public radio interface (common public radio interface, CPRI).

Specifically, the network side device 800 in this embodiment of the present invention further includes instructions or a program stored in the memory 85 and executable on the processor 84, and the processor 84 invokes the instructions or the program in the memory 85 to perform the method performed by the modules shown in FIG. 6, and achieves the same technical effect. To avoid repetition, details are not described herein again.

An embodiment of this application further provides a readable storage medium. The readable storage medium stores a program or instructions, where the program or the instructions, when executed by a processor, implement processes of the foregoing request information reporting method embodiments, the program or the instructions, when executed by a processor, implement processes of the foregoing information configuration method embodiment, and can achieve the same technical effect. To avoid repetition, details are not described herein again.

The processor is a processor in the terminal in the foregoing embodiments. The readable storage medium includes a computer-readable storage medium, such as a computer read-only memory ROM, a random access memory RAM, a magnetic disk, or an optical disc. In some examples, the readable storage medium may be a non-transient readable storage medium.

An embodiment of this application further provides a chip. The chip includes a processor and a communication interface. The communication interface is coupled to the processor. The processor is configured to run a program or instructions, to implement the processes of the request information reporting method embodiments, or implement the processes of the information configuration method embodiment, and can achieve the same technical effect. To avoid repetition, details are not described herein again.

It should be understood that the chip provided in this embodiment of this application may also be referred to as a system-level chip, a system chip, a chip system, a system on chip, or the like.

An embodiment of this application further provides a computer program/program product. The computer program/program product is stored in a storage medium. The computer program/program product is executed by at least one processor to implement the processes of the request information reporting method embodiments, or the computer program/program product is executed by at least one processor to implement the processes of the information configuration method embodiment, and can achieve the same technical effect. To avoid repetition, details are not described herein again.

An embodiment of this application further provides a communication system, including a terminal and a network side device. The terminal may be configured to perform the steps of the request information reporting method. The network side device may be configured to perform the steps of the information configuration method.

It should be noted that the term "include", "comprise", or any other variant thereof in this specification is intended to cover non-exclusive inclusion, so that a process, a method, an object, or an apparatus that includes a series of elements not only includes the elements, but also includes other elements that are not expressly listed, or may further include elements that are inherent to the process, the method, the object, or the apparatus. Without more limitations, elements defined by the sentence "including one" does not exclude that there are still other same elements in the processes, methods, objects, or apparatuses. In addition, it should be noted that the scope of the method and apparatus in the implementations of this application is not limited to performing functions in the order shown or discussed, and may further include performing functions in a substantially simultaneous manner or in a reverse order based on the functions involved. For example, the described methods may be performed in an order different from the described order, and various steps may be added, omitted or combined. In addition, features described with reference to some examples may be combined in other examples.

According to the descriptions in the foregoing implementations, a person skilled in the art may clearly learn that the method according to the foregoing embodiments may be implemented by a computer software product with a necessary general-purpose hardware platform, or certainly by hardware. The computer software product is stored in a storage medium (such as a ROM, a RAM, a disk, and an optical disk), including several instructions to enable a terminal or a network side device to perform the methods in the embodiments of this application. It should be noted that the storage medium may be a non-volatile readable storage medium or a non-transient readable storage medium.

The embodiments of this application are described above with reference to the accompanying drawings. However, this application is not limited to the specific implementations described above. The specific implementations described above are merely examples and not limitative. A person of ordinary skill in the art may make implementations in various forms under the teaching of this application without departing from the spirit of this application and the protection scope of the claims, and these implementations shall all fall within the protection of this application.

## Claims

1. A request information reporting method, comprising:
obtaining, by a terminal, configuration information from a network device, wherein the configuration information comprises information of time quality; and
sending, by the terminal, time quality request information by using a target uplink message, wherein
the target uplink message comprises at least one of messages Msg1, Msg3, MsgA, configured grant CG physical uplink shared channel PUSCH, and service request SR.

2. The method according to claim 1, wherein before the sending, by the terminal, time quality request information by using a target uplink message, the method comprises:
performing, by the terminal, at least one of the following when a first condition is satisfied:
pushing, by an RRC layer of the terminal, a change message of the information of time quality to a NAS layer of the terminal;
triggering an RRC connection establishment process; and
triggering an RRC connection resume process,
wherein the first condition comprises at least one of the following:
the terminal is in an IDLE state or an INACTIVE state;
the terminal is enabled to perform change processing on the information of time quality;
the information of time quality is changed; and
a UE has to-be-transmitted service data, wherein
the change message of the information of time quality indicates at least one of the following:
a change of a current version of the information of time quality;
a version of information of time quality carried in a current cell broadcast; and
a UE identifier.

3. The method according to claim 2, wherein when the terminal performs the triggering the RRC connection establishment process or the triggering the RRC connection resume process, the sending, by the terminal, time quality request information by using a target uplink message comprises any one of the following:
sending the time quality request information by using the target uplink message after the terminal performs the triggering the RRC connection establishment process; or
sending the time quality request information by using the target uplink message after the terminal performs the triggering the RRC connection resume process.

4. The method according to any one of claims 1 to 3, wherein the configuration information further comprises at least one of the following:
a random access resource configuration;
a CG PUSCH resource configuration; and
a rollback parameter, wherein
the random access resource configuration is dedicatedly used for sending the time quality request information, and the rollback parameter is used for delaying at least one of performing the RRC connection establishment process by the terminal and triggering the RRC connection resume process.

5. The method according to any one of claims 1 to 4, wherein before the sending, by the terminal, time quality request information by using a target uplink message, the method comprises at least one of the following:
determining, by the terminal according to the configuration information, that the target uplink message is any one of the messages Msg1, Msg3, MsgA, and CG PUSCH; and
generating, by the terminal, the time quality request information.

6. The method according to any one of claims 1 to 5, wherein the sending, by the terminal, time quality request information by using a target uplink message comprises any one of the following:
sending, by the terminal, any one of the Msg3, the MsgA, or the CG PUSCH, wherein the any one of the Msg3, the MsgA, or the CG PUSCH carries a cause value, and the cause value is used for indicating a request for the information of time quality;
sending, by the terminal, any one of the messages Msg3, MsgA, and CG PUSCH, wherein the any one of the messages Msg3, MsgA, and CG PUSCH is multiplexed to transmit the time quality request information; or
sending, by the terminal, the message Msg1, wherein the message Msg1 is transmitted by using a preset random access resource.

7. The method according to claim 1, wherein
before the sending, by the terminal, time quality request information by using a target uplink message, the method comprises: triggering reporting of the time quality request information when a second condition is satisfied; or
the sending, by the terminal, time quality request information by using a target uplink message comprises: sending, by the terminal, the time quality request information by using the target uplink message when a second condition is satisfied, wherein
the second condition comprises at least one of the following:
the terminal is in a connected CONNECTED state;
the terminal is enabled to perform change processing on the information of time quality;
the information of time quality is changed; and
a UE has to-be-transmitted service data.

8. The method according to claim 7, wherein before the sending, by the terminal, time quality request information by using a target uplink message, the method further comprises:
generating the time quality request information when a size of an uplink shared channel resource corresponding to the target uplink message is greater than or equal to a size of the time quality request information.

9. The method according to claim 7 or 8, wherein the sending, by the terminal, time quality request information by using a target uplink message comprises:
determining that the target uplink message is the SR if a first SR resource exists when the size of the uplink shared channel resource corresponding to the target uplink message is less than the size of the time quality request information; and
sending the time quality request information by using the target uplink message.

10. The method according to claim 8 or 9, wherein after the sending, by the terminal, time quality request information by using a target uplink message, the method comprises:
canceling the triggered reporting of the time quality request information.

11. The method according to claim 2 or 7, wherein when the terminal is enabled to perform change processing on the information of time quality, the method further comprises:
indicating, by the NAS layer of the terminal, enabling information to the RRC layer of the terminal; or
obtaining, by the RRC layer of the terminal, enabling information by using network side signaling, wherein
the enabling information is used for enabling the RRC layer of the terminal to perform at least one of the following:
monitoring a change of the information of time quality;
generating the time quality request information; and
reporting the time quality request information.

12. An information configuration method, comprising:
sending, by a network device, configuration information to a terminal, wherein the configuration information comprises first information of time quality;
receiving, by the network device, time quality request information sent by the terminal by using a target uplink message; and
sending, by the network device, second information of time quality to the terminal, wherein
the target uplink message comprises at least one of messages Msg1, Msg3, MsgA, configured grant CG physical uplink shared channel PUSCH, and service request SR.

13. The method according to claim 12, wherein the receiving time quality request information sent by the terminal by using a target uplink message comprises any one of the following:
receiving, after the terminal performs triggering an RRC connection establishment process, the time quality request information sent by the terminal by using the target uplink message; or
receiving, after the terminal performs triggering an RRC connection resume process, the time quality request information sent by the terminal by using the target uplink message.

14. The method according to claim 12 or 13, wherein the configuration information further comprises at least one of the following:
a random access resource configuration;
a CG PUSCH resource configuration; and
a rollback parameter, wherein
the random access resource configuration is dedicatedly used for sending the time quality request information, and the rollback parameter is used for delaying at least one of performing the RRC connection establishment process by the terminal and triggering the RRC connection resume process.

15. The method according to any one of claims 12 to 14, wherein the receiving time quality request information sent by the terminal by using a target uplink message comprises any one of the following:
receiving any one of the Msg3, the MsgA, or the CG PUSCH sent by the terminal, wherein the any one of the Msg3, the MsgA, or the CG PUSCH carries a cause value, and the cause value is used for indicating a request for the information of time quality;
receiving any one of the messages Msg3, MsgA, and CG PUSCH sent by the terminal, wherein the any one of the messages Msg3, MsgA, and CG PUSCH is multiplexed to transmit the time quality request information; or
receiving the message Msg1 sent by the terminal, wherein the message Msg1 is transmitted by using a preset random access resource.

16. The method according to any one of claims 12 to 15, further comprising:
sending, by the network device, enabling information to the terminal, wherein
the enabling information is used for enabling an RRC layer of the terminal to perform at least one of the following:
monitoring a change of the information of time quality;
generating the time quality request information; and
reporting the time quality request information.

17. A terminal, comprising:
a first receiving module, configured to obtain configuration information from a network device, wherein the configuration information comprises information of time quality; and
a first sending module, configured to send time quality request information by using a target uplink message, wherein
the target uplink message comprises at least one of messages Msg1, Msg3, MsgA, configured grant CG physical uplink shared channel PUSCH, and service request SR.

18. A network device, comprising:
a second sending module, configured to send configuration information to a terminal, wherein the configuration information comprises first information of time quality;
a second receiving module, configured to receive time quality request information sent by the terminal by using a target uplink message; and
a third sending module, configured to send second information of time quality to the terminal, wherein
the target uplink message comprises at least one of messages Msg1, Msg3, MsgA, configured grant CG physical uplink shared channel PUSCH, and service request SR.

19. A terminal, comprising a processor and a memory, wherein the memory stores a program or instructions runnable on the processor, and the program or the instructions, when executed by the processor, implement the steps of the request information reporting method according to any one of claims 1 to 11.

20. A network side device, comprising a processor and a memory, wherein the memory stores a program or instructions runnable on the processor, and the program or the instructions, when executed by the processor, implement the steps of the information configuration method according to any one of claims 12 to 16.

21. A readable storage medium, storing a program or instructions, wherein the program or the instructions, when executed by a processor, implement the steps of the request information reporting method according to any one of claims 1 to 11, or implement the steps of the information configuration method according to any one of claims 12 to 16.
